Europäisches Patentamt

European Patent Office

Office européen des brevets

(11) Publication number: **0 350 511**

**A1**

(12) **EUROPEAN PATENT APPLICATION**
**published in accordance with Art.**
**158(3) EPC**

(21) Application number: **89901306.4**

(22) Date of filing: **06.01.89**

(86) International application number:
**PCT/JP89/00010**

(87) International publication number:
**WO 89/06452 (13.07.89 89/15)**

�důint. Cl.⁴: **H02H 7/085 , H02P 5/00 ,**
**H02H 7/12**

(30) Priority: **08.01.88 JP 2152/88**

(43) Date of publication of application:
**17.01.90 Bulletin 90/03**

(84) Designated Contracting States:
**DE FR GB**

(71) Applicant: **FANUC LTD**
**3580, Shibokusa Aza-Komanba Oshino-mura**
**Minamitsuru-gun Yamanashi 401-05(JP)**

(72) Inventor: **KOHARI, Katsuo**
**6-35-210, Fujimicho**
**Tachikawa-shi Tokyo 190(JP)**
Inventor: **FUJIOKA, Yoshiki Fanuc Mansion**
**Harimomi 6-305**
**3537-1, Shibokusa Oshinomura**
**Minamitsuru-gun Yamanashi 401-05(JP)**
Inventor: **KONO, Shinichi Fanuc Mansion**
**Harimomi 7-203**
**3539-1, Shibokusa Oshinomura**
**Minamitsuru-gun Yamanashi 401-05(JP)**
Inventor: **TAKAHASHI, Hironobu Fanuc Dai-3**
**Vira-karamatsu**
**3527-1, Shibokusa Oshinomura**
**Minamitsuru-gun Yamanashi 401-05(JP)**

(74) Representative: **Brunner, Michael John et al**
**GILL JENNINGS & EVERY 53-64 Chancery**
**Lane**
**London WC2A 1HN(GB)**

(54) SYSTEM FOR PROTECTION SERVO AMPLIFIER.

㉑ A system for protecting semiconductors (3) and other components in a servo amplifier (2) from overcurrents. A speed control circuit (1) uses a timer to measure the time during which a load current exceeds a predetermined value. If the time exceeds a predetermined value, the control circuit stops the operation of the servo amplifier and produces an alarm signal. This makes it possible to reliably protect the semiconductor without delay in the detection.

FIG.1

D E S C R I P T I O N

PROTECTION METHOD FOR A SERVO AMPLIFIER

Technical Field

The present invention relates to a method of protection of semiconductors of a servo amplifier and the like, and more particularly, to a protection method for a servo amplifier wherein a semiconductor and the like are protected by detecting an overcurrent state lasting for a time longer than a predetermined time.

Background Art

A number of semiconductors, such as large-current diodes and transistors, are used in a servo amplifier, and if a current larger than the rated current flows through these elements, they will be damaged due to a corresponding rise in the temperature thereof. Accordingly, various methods of protection have been proposed.

Generally, a method is used in which the temperature of a semiconductor, such as a transistor, or a heat-dissipating portion thereof is directly monitored by a thermostat, and input thereto is stopped to protect the transistor or the like when the temperature becomes higher than a predetermined value.

The thermostat method is effective if the overcurrent is not too large, but if an overload occurs whereby a large current flows in a short time, this method cannot ensure a reliable protection of the transistor or the like, due to a delay in detection attributable to the time constant of a radiator or a time lag in the thermostatic detection.

## Disclosure of the Invention

The present invention has been created in view of the above drawbacks, and an object thereof is to provide a protection method for a servo amplifier wherein a semiconductor and the like are protected by detecting an overcurrent time longer than a predetermined time.

To solve the above problem, according to the present invention, there is provided a protection method for a servo amplifier wherein a semiconductor and the like of the servo amplifier is protected from an overcurrent, the protection method being characterized in that a time for which a load current of a predetermined value or larger flows is measured by a timer, and the operation of the servo amplifier is stopped and an alarm signal is output when the measured time is longer than a predetermined time.

Accordingly, since detection is effected by measuring the load current and measuring the time for which an overcurrent state exists by using the timer, the semiconductor and the like can be reliably protected without a delay such as entailed by a temperature measurement.

## Brief Description of the Drawings

Fig. 1 is a block diagram of a servo amplifier according to one embodiment of the present invention; and

Fig. 2 is a flow chart of an alarm detection process.

## Best Mode of Carrying Out the Invention

One embodiment of the present invention will now be described with reference to the drawings.

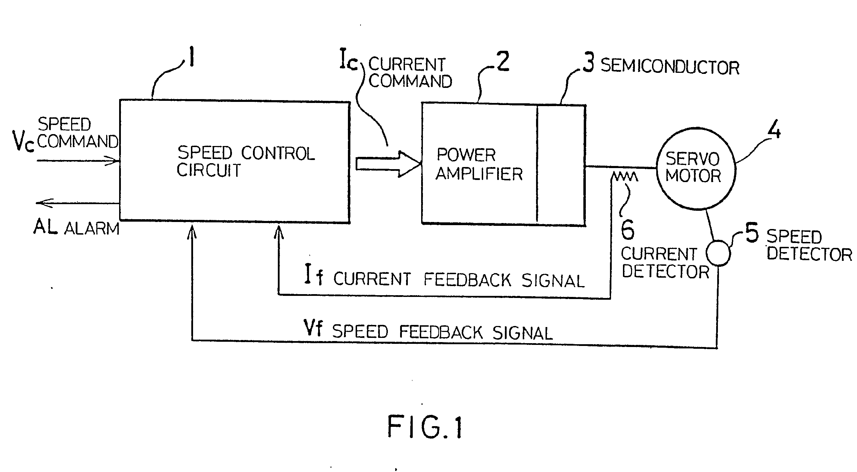

In Fig. 1, which shows a block diagram of a servo amplifier according to the embodiment of the present invention, a speed control circuit 1 receives a speed command Vc from a numerical control apparatus (CNC) and outputs a current command Ic. The speed control circuit 1 is composed of a microprocessor, a memory for storing a control program, and a timer for timing, etc.

A power amplifier 2 receives the current command Ic and outputs same to a PWM circuit formed of a semiconductor 3, such as a power transistor, to thereby drive a servomotor. The servomotor 4 is used to rotate a spindle of a machine tool or to position a table.

A speed detector 5 is coupled to the servomotor 4 directly or through a gear or the like, and detects the speed of the servomotor 4. In practice, a tachometer generator or a pulse coder may be used as the speed detector. A signal from the speed detector is fed back as a speed feedback signal Vf to the speed control circuit 1.

A current detector 6 directly detects the load current of the servomotor, which load current is also a current of the transistor in the power amplifier, and the current detected by the current detector 6 is fed back as a current feedback signal If to the speed control circuit 1.

If the load current is larger than a predetermined value, a time is measured by the timer in the speed control circuit 1, and if an overcurrent state continues for a predetermined time or longer, an alarm is given and output of the current command Ic is stopped and an alarm signal AL is sent to the numerical control apparatus (CNC).

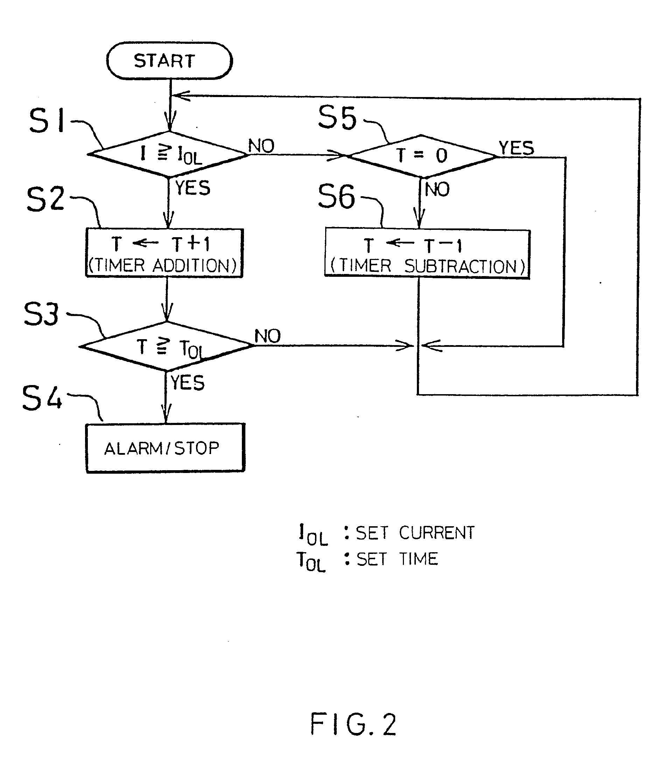

The following is a description of a process for detecting the alarm. Figure 2 shows a flow chart for the alarm detection process. In Fig. 2, the numerals following the symbol S indicate step numbers.

[S1] It is determined whether the load current I is larger than a set current $I_{OL}$. If yes, the program proceeds to S2, and if no, the program proceeds to S5.

[S2] Since the load current I is larger than the set current $I_{OL}$, a time is measured by the timer in the current control circuit 1.

[S3]  It is determined whether or not a measured time T is longer than a set time $T_{OL}$.  If yes, the program proceeds to S4, and if no, the program proceeds to S1.

[S4]  Since the overcurrent time is longer than the set time, an alarm is given and the drive of the servomotor is stopped, and further, an alarm signal is output to the numerical control apparatus (CNC).

[S5]  Since the load current I is not larger than the set current $I_{OL}$, the time measured by the timer is determined.  If the time is 0, the program proceeds to S1, but if not, the program proceeds to S6.

[S6]  Since the load current I is not larger than the set current $I_{OL}$ and the time of the timer is not 0, the timer is operated in the negative direction.

As shown above, the load current is directly measured, and the overcurrent time is measured by the timer.  If the overcurrent time is longer than the set time, the operation of the servo amplifier is stopped, and thus the semiconductor, such as a power transistor, is reliably protected without a delay such as entailed by a thermostatic detection.

In the above description, the power transistor is mentioned as the object to be protected, but the present invention also may be applied to the protection of an element such as a power diode or FET.

According to the present invention as described above, the time for which an overcurrent state exists is measured by the timer to protect the semiconductor and the like of the servo amplifier, and thus the semiconductor and the like can be reliably protected without detection delays.

CLAIMS

1. A protection method for a servo amplifier wherein a semiconductor and the like of the servo amplifier is protected from an overcurrent,

said protection method being characterized in that a time for which a load current of a predetermined value or larger flows is measured by a timer, and the operation of the servo amplifier is stopped and an alarm signal is output when said time is longer than a predetermined time.

FIG.1

$I_{OL}$ : SET CURRENT
$T_{OL}$ : SET TIME

FIG. 2

# INTERNATIONAL SEARCH REPORT

International Application No PCT/JP89/00010

## I. CLASSIFICATION OF SUBJECT MATTER (if several classification symbols apply, indicate all) [6]

According to International Patent Classification (IPC) or to both National Classification and IPC

Int.Cl$^4$    H02H7/085, H02P5/00, H02H7/12

## II. FIELDS SEARCHED

### Minimum Documentation Searched [7]

| Classification System | Classification Symbols |
|---|---|
| IPC | H02H7/08-7/085, H02P5/00-5/52, H02H7/12-7/122 |

### Documentation Searched other than Minimum Documentation to the Extent that such Documents are Included in the Fields Searched [8]

| | |
|---|---|
| Jitsuyo Shinan Koho | 1926 – 1988 |
| Kokai Jitsuyo Shinan Koho | 1971 – 1988 |

## III. DOCUMENTS CONSIDERED TO BE RELEVANT [9]

| Category [*] | Citation of Document, [11] with indication, where appropriate, of the relevant passages [12] | Relevant to Claim No. [13] |
|---|---|---|
| X | JP, A, 53-132746 (Ricoh Co., Ltd.) 18 November 1978 (18. 11. 78) Columns 3 to 8 (Family: none) | 1 |
| X | JP, U, 61-15984 (Mitsubishi Electric Corporation) 3 October 1986 (03. 10. 86) Figs. 1, 4 (Family: none) | 1 |
| X | JP, A, 54-115724 (Fuji Electric Mfg. Co., Ltd.) 8 September 1979 (08. 09. 79) Fig. 2 (Family: none) | 1 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| January 25, 1989 (25. 01. 89) | February 6, 1989 (06. 02. 89) |
| International Searching Authority | Signature of Authorized Officer |
| Japanese Patent Office | |

Form PCT ISA 210 (second sheet) (January 1985)